# EUROPEAN PATENT APPLICATION

(11) **EP 1 873 621 A1**
(43) Date of publication of application: **02.01.2008**
(21) Application number: 07101036.7
(22) Date of filing: 23.01.2007
(51) Int. Cl.: G06F 3/048

(54) **Driving method and input method for touch panel**

(30) Priority: 29.06.2006 JP 2006178889
(71) Applicant: Aki Corporation, Musashino-shi, Tokyo (JP)
(72) Inventor: Yoshida, Shuji, Tokyo (JP)
(74) Representative: Carpintero Lopez, Francisco

(57) **Abstract**

Touching (T) an arbitrary position 4 on a screen 1 displayed on a touch panel sets a plurality of screen areas A, B, C, and D into which the screen is divided using lines L1 and L2 which contain the position and which traverse the touch panel screen. Then, touching (C) an arbitrary position belonging to one C of the screen areas performs a process operation (C screen display) assigned to the screen area C. Further, releasing (R) the position 5 confirms the process operation (C screen display) assigned to the screen area C.

## Description

### CROSS-REFERENCE TO RELATED APPLICATION

The present application claims the benefit of the priority based on Japanese Patent Application No. 2006-178889 filed on June 29, 2006, and the contents of this patent application are incorporated herein by reference.

### BACKGROUND OF THE INVENTION

### 1. Field of the invention

The present invention relates to a driving method and an input method for a touch panel, and in particular, to a driving method and an input method for a touch panel on which a screen is displayed so that an input operation can be performed by touching the screen.

### 2. Description of the related arts

A touch panel is an input device combined with a display such as an LCD to allow input operations for an instrument to be performed. To select one of the buttons displayed in a certain area on the screen, the instrument user touches the area on the touch panel to enable an input operation to be performed as if the button were pressed. Input devices using touch panels are widely used in bank ATMs, OA instruments, PDAs (Personal Digital Assistant), cellular phones, game machines, and the like.

A touch panel generally comprises two resistant films laid on top of each other via a spacer. The resistant films are integrated with the respective electrodes. Consequently, the upper resistance film serves as an upper electrode, while the lower resistance film serves as a lower electrode. This configuration provides the touch panel with two functions. A first function is as follows. When the instrument user touches the touch panel with their finger or the like, the upper electrode contacts the lower electrode. The touch panel thus determines that the input operation has been turned on. A second function is as follows. The upper electrode detects the position of the input point on the X axis. The lower electrode detects the position of the input point on the Y axis. The touch panel recognizes the coordinates of the input point on the basis of these two data. In other words, the upper and lower electrodes detect the voltage (analog) of the input point and subj ect the voltage to an AD conversion to obtain a digital value. The upper and lower electrodes thus recognize the X axis coordinate value and Y axis coordinate value, respectively, of the input point. Then, on the basis of the coordinate values of the input point, the electrodes recognize the input operation assigned to the button corresponding to the coordinate position.

A given limitation determined by the size of the finger is imposed on the button area on the touch panel in order to accurately detect the input coordinates. Accordingly, various efforts have been made to simultaneously display the functions and operations provided in the instrument, within a given screen. For example, portable information terminals such as PDAs adopt an input method using a pen (stylus or the like) instead of the finger.

With the touch panel, the screen may have a hierarchical structure (tree) in order to allow efficient selections from the various functions and operations provided in the instrument. For example, a game machine first allows the user to select a desired game from a game selection screen and then displays another selection screen to allow the user to sequentially select setting conditions for the game from the selection screen. The game machine may use an input method of setting folders on the screen so that a screen can be selected by touching the title of any folder.

On the other hand, Patent Document 1 discloses a data input method using an analog touch panel so as to enable all data input operations that can be performed using a mouse (particularly a data input operation via a right click). Patent Document 2 discloses a touch panel input device and input method which detects the trace of a touch operation.

According to the data input method in Japanese Patent Laid-Open No. 2000-47807, with a criterion position (first coordinate) kept depressed and specified, a reference position (second coordinate) is specified. Within a short time after this, the specification of the reference position (second coordinate) is cancelled. This operation allows the performance of a data processing operation corresponding to a right click on the first depressed coordinate. Furthermore, the first coordinate is set to be the origin of a graph. Sixteen quadrants are provided on the X axis and Y axis so that different data processing operations are performed in the respective quadrants.

The touch panel input device and input method in Japanese Patent Laid-Open 2003-140820 determines the command in touch input data on the basis of a clocking start signal that is transmitted to a timer, a clocking end signal that it output by the timer, and a status signal. Specifically, the user uses a combination of operations such as a short depression, a long depression, and a release to input operations such as playback, stop, next song, previous song, fast forward, and fast rewind, without viewing the touch panel.

When the functions and operations of the instrument are displayed on the screen of the touch panel, the above limitation on the button area may disadvantageously prevent the user from easily operating the touch panel. The user may perform erroneous operations depending on how the buttons are depressed. In particular, for an instrument with a small display screen, the buttons are also small. This may make the user feel stress with operations and cause the user to perform erroneous operations.

When the functions and operations provided in the instrument have a hierarchical structure (tree), every time a selection display for one layer is to be changed to a selection display for another layer, the appropriate button must be depressed to return to higher layers. This requires a lot of time and effort. With a complicated hierarchical structure, the user may disadvantageously be unable to determine where they are in the entire hierarchy,

### SUMMARY OF THE INVENTION

The present invention solves these problems by providing a driving method and an input method for a touch panel which allow a user to easily perform input operations to reduce the user's erroneous operations.

The present invention has the characteristics shown below.
(1) To accomplish this object, a driving method for a touch panel according to the present invention is characterized by comprising, when an arbitrary position on a screen displayed on a touch panel is touched, setting a plurality of screen areas into which the screen is divided using lines which contain the position and which traverse the touch panel screen, and when an arbitrary position belonging to one of the screen areas is touched, performing a process operation assigned to the screen area.
(2) In the driving method for a touch panel, preferably, the screen of the touch panel is displayed by touching an arbitrary position in the screen frame of the activated touch panel. Further, in the driving method for a touch panel, preferably, the lines traversing the touch screen are oblique lines crossing each other on the touch panel screen.
(3) In the driving method for a touch panel, preferably, the lines traversing the touch screen are a line extending through the touch panel screen in a vertical direction and a line extending through the touch panel screen in a horizontal direction.
(4) In the driving method for a touch panel, preferably, each of the process operations assigned to the divided plurality of screen areas is confirmed by releasing the touched position.
(5) In the driving method for a touch panel, preferably, sliding the touched position while keeping in touch with the touched position allows corresponding ones of the process operations assigned to the divided plurality of screen areas to be performed in the same manner as when different positions are consecutively touched.
(6) In the driving method for a touch panel, preferably, holding the touched position allows a corresponding one of the process operations assigned to the divided plurality of screen areas to be performed in the same manner as when the position is continuously touched.
(7) In the driving method for a touch panel, preferably, the process operations assigned to the divided plurality of screen areas are displaying of menu selection screens.
(8) An input method for a touch panel according to the present invention is characterized by comprising, when an arbitrary position on a screen displayed on a touch panel is touched and an arbitrary position is then touched which belongs to one of a plurality of screen areas into which the screen is divided using lines which contain the position and which traverse the touch panel screen, displaying a new screen assigned to the screen area.
(9) In the input method for a touch panel, preferably, the screen of the touch panel is displayed by touching an arbitrary position in the screen frame of the activated touch panel.
(10) In the input method for a touch panel, preferably, the display of the new screen is confirmed by releasing the touched position.
(11) The input method for a touch panel preferably further comprises switching the confirmed display of the screen to a target screen when an arbitrary position on the screen displayed on the touch panel is touched and then within a given time, the same position is touched a number of times that is equal to the number of layers present between the displayed screen and the target screen.
(12) In the input method for a touch panel, preferably, the confirmed display of the screen is switched to a target screen by touching an arbitrary position on the screen displayed on the touch panel and then within a given time, touching the same position a number of times the number of which is equal to layers present between the displayed screen and the target screen.

### BRIEF DESCRIPTION OF THE DRAWINGS

Figs. 1A to 1C are diagrams illustrating the basic configuration of an embodiment of a driving method and an input method according to the present invention;
Figs. 2A and 2B are diagrams illustrating the basic operation of the embodiment of the driving method and input method according to the present invention;
Fig. 3 is a diagram illustrating touch panel operation patterns performed by a user according to the present embodiment;
Fig. 4 is a flowchart of the driving method;
Fig. 5 is a flowchart of the input method;
Fig. 6 is a conceptual drawing of a menu selecting method according to an embodiment of the driving method and input method; and
Fig. 7 is a diagram showing a hierarchical structure illustrating a double touch + release function and a double touch + hold function.

### DESCRIPTION OF PREFERRED EMBODIMENTS

Embodiments of the present invention will be described in detail below with reference to the drawings.

### (Basic Configuration)

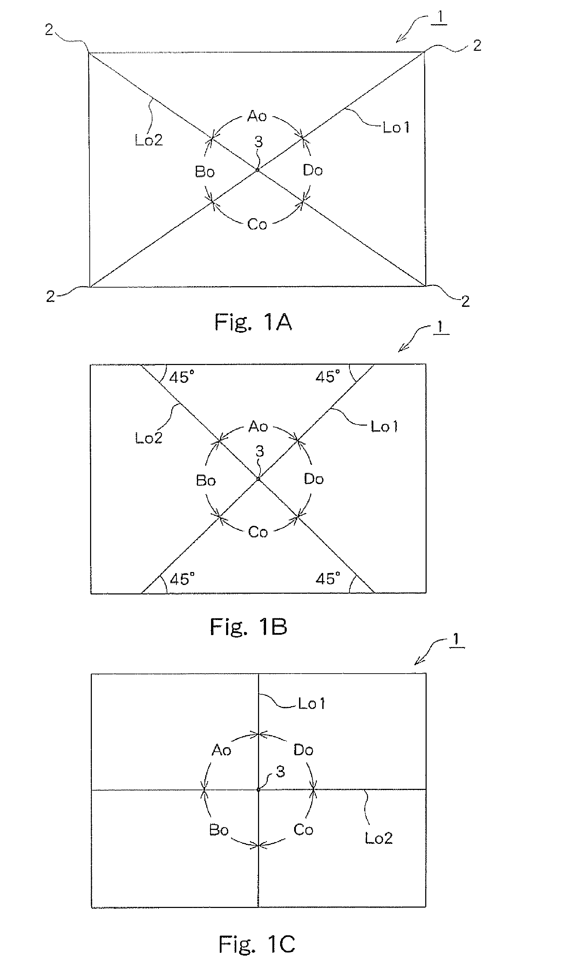

Fig. 1 shows the basic configuration of an embodiment of a driving method and an input method according to the present invention. In the present embodiment, as shown in Fig. 1A, a touch panel screen 1 is basically composed of oblique lines L01 and L02 on the touch panel screen 1, an intersecting point 3 between the oblique lines L01 and L02, and four areas A0, B0, C0, and D0 into which the screen is divided using the two oblique lines L01 and L02. In the present embodiment, the oblique lines L01 and L02 are two diagonal lines each joining corners 2 of the touch panel screen 1 . This allows a user to easily recognize the angles of the oblique lines and the areas into which the screen is divided using the oblique lines, on the basis of contour of the touch panel screen 1. However, the oblique lines L01 and L02 are not limited to the diagonal lines but may cross each other at an angle of about 45 ° with respect to the top and bottom sides of the touch panel screen as shown in Fig. 1B. Alternatively, the oblique lines L01 and L02 may cross each other at a different angle.

Fig. 1C shows another embodiment of the lines traversing the touch panel screen, that is, a line extending through the touch panel screen in a vertical direction and a line extending through the touch panel screen in a horizontal direction. In this case, the four areas AO, B0, C0, and DO are located in the upper right, lower right, upper left, and lower left of the screen, respectively. Alternatively, the lines traversing the touch panel screen may be a combination of a plurality of lines selected from the oblique lines, the line extending through the touch panel screen in the vertical direction, and the line extending through the touch panel screen in the horizontal direction, described above. Further, the lines traversing the touch panel screen are displayed on the screen according to the present embodiment. However, the lines may not be displayed on the screen.

### (Basic Operation)

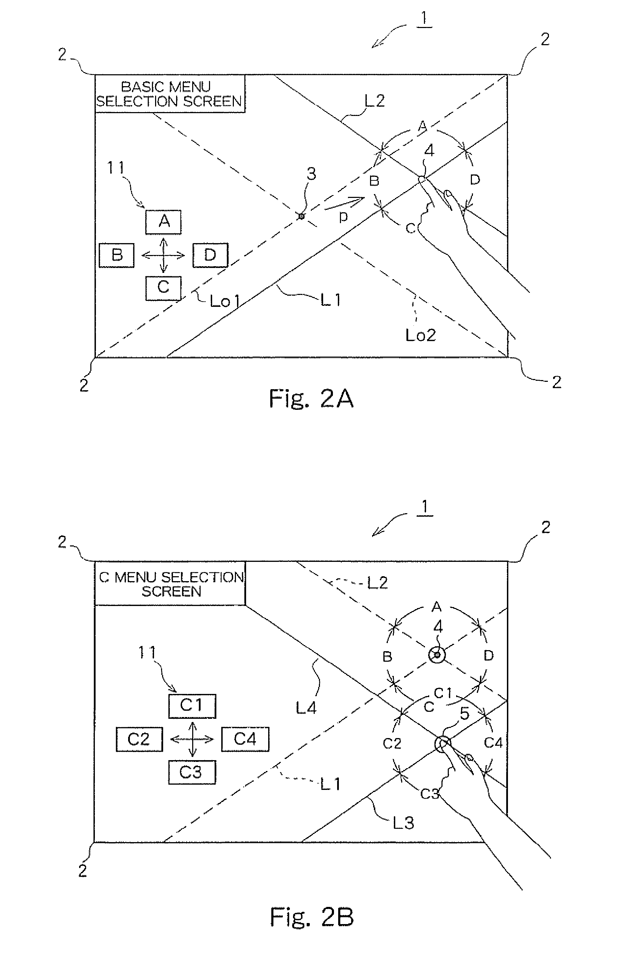

Figs. 2A and 2B show the basic operation of the embodiment of the driving method and input method according to the present invention. As shown in Fig. 2A, when the user touches an arbitrary first point 4 on a "basic menu selection screen" displayed on the touch panel, an intersecting point 3 moves to the first point 4 as shown by arrow P in Fig. 2A. New oblique lines L1 and L2 are then set which contain the first point 4, and which are substantially parallel to the two oblique lines L01 and L02. Four areas A, B, C, and D are newly set into which the screen is divided using the two oblique lines L1 and L2.

As shown in Fig. 2B, the user then slides their finger or the like downward in the figure while keeping the finger in touch with a second point 5 in the selected area C. Touching the area C with the user's finger or the like switches the screen to a "C menu selection screen" assigned to the area C. Then, the user releases their finger at the second point 5. The release confirms the screen.

### (Operation Patterns)

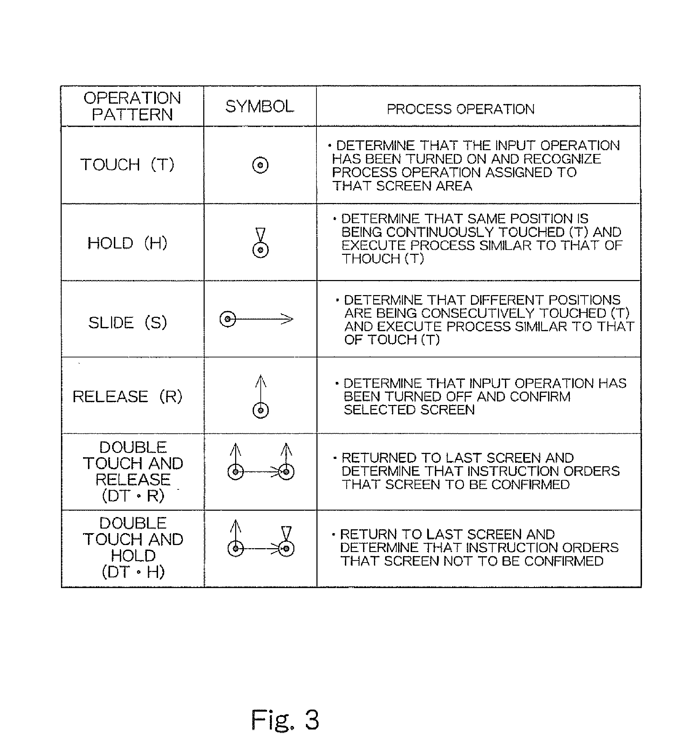

Fig. 3 shows the user's touch panel operation patterns, symbols for the operation patterns, and the corresponding process operations. These operation patterns include four basic operation patterns, a touch (T), a hold (H), a slide (S), and a release (R). The touch (T) means that the screen of the touch panel is touched with the user's finger or the like. The hold (H) means that the screen is kept touched with the user's finger or the like. The hold (H) is determined to continuously touch (T) the same position and is processed similarly to the touch (T). The slide (S) means that the user's finger or the like is moved on the screen while maintaining contact with the screen. The slide (S) is determined to consecutively touch different positions and is processed similarly to the touch (T) . The release (R) means that during the touch, hold (continuous touching of the same position), or slide (continuous touching of different positions), the user's finger or the like is released from the screen. These basic operations may be performed with a pen or another tool instead of the user' s finger. In the related figures of the specification, the basic operation patterns are denoted by the respective symbols. A basic operation pattern called tap may be provided in which the screen is tapped; this operation pattern may be distinguished from the touch (T).

The touch panel recognizes these basis operation patterns via its two functions: (1) a function for determining that an input operation is on or off and (2) a function for recognizing the coordinate values of an input point. For the touch (T), an upper panel and a lower panel constituting the touch panel contact each other to allow the touch panel to determine that the input operation has been turned on. A process operation assigned to that screen area is then performed. For the hold (H), the upper and lower electrodes keep contacting each other, and the input operation is determined to remain on with those coordinate values. A process similar to that for the touch (T) is then executed. For the slide (S), the upper and lower electrodes keep contacting each other, and the coordinates of the contact point are recognized to have moved. The input operation is thus determined to remain on with the moving coordinate values, and a process similar to that for the touch (T) is then executed. For the release (R), the contact between the upper and lower electrodes is disrupted to allow the touch panel to determine that the input operation has been turned off. The selected screen is then confirmed.

The settings for the process operations for the basic operation patterns are not limited to those described above, and other embodiments are possible. For example, for the slide (S), while the user's finger keeping in touch with the screen is moving on the screen, the touch panel may determine that the screen has been touched if a position resulting from the movement is held for a time longer than a given time, instead of determining that the different positions are being consecutively touched, In this case, the touch panel has a timer as its internal function to measure time for determination and processing.

According to the present invention, all input operations are performed using these basic operation patterns and applied operation patterns obtained by combining the basic operation patterns. Instructions thus input to the touch panel are then performed. Fig. 3 shows applied operation patterns obtained by combining the four basic operation patterns, the touch (T), hold (H), slide (S), and release (R). Basically, an applied operation pattern called a double touch cancels a confirmed screen. In the double touch, the screen is touched two consecutive times. In the present embodiment, a double touch + release (DT 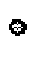 R) allows the touch panel to determine that an instruction has been given ordering the touch panel to return to the last screen. This operation pattern is detected if two "touch (T) + release (R)" operations are performed at an arbitrary position on the screen displayed on the touch panel, within a given time (for example, 0,5 second or 1.0 second). One "touch (T) + release (R)" operation allows the touched character to be confirmed in accordance with the settings for the basic operation patterns. Consequently, the screen remains unchanged. Subsequently, when the second touch (T) + release (R) is repeated within the given time, that screen is cancelled. The screen in the preceding layer is displayed.

The present embodiment determines that the double touch + hold (DT 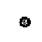 H) instructs the character to be changed to the last, different selection menu. This operation pattern is determined if the first touch (T) + release (R) and the second touch (T) + hold (H) are executed at an arbitrary position on the screen displayed on the touch panel, within a given time (for example, 0.5 second or 1.0 second). One touch (T) + release (R) operation confirms the touched screen and no change of the screen occurs. The second touch (T) + hold (R) within the given time after the first one cancels that screen. This enables the other selection menus in the layer of the preceding screen to be viewed. The double touch (DT) may be defined as a double tap, an applied operation pattern in which the screen is tapped.

In the prior art, with the double touch (DT) with the user's finger or the like, touching exactly the same point is difficult. Thus, for example, the method disclosed in Patent Document 1 has been proposed. However, in the present invention, for all the input operations, no buttons are present on the touch panel screen 1. This eliminates the need to precisely press a particular point twice. Therefore, the double touch (DT) is a simple operation and is rarely erroneously performed by the user.

### (Driving Method and Input Method)

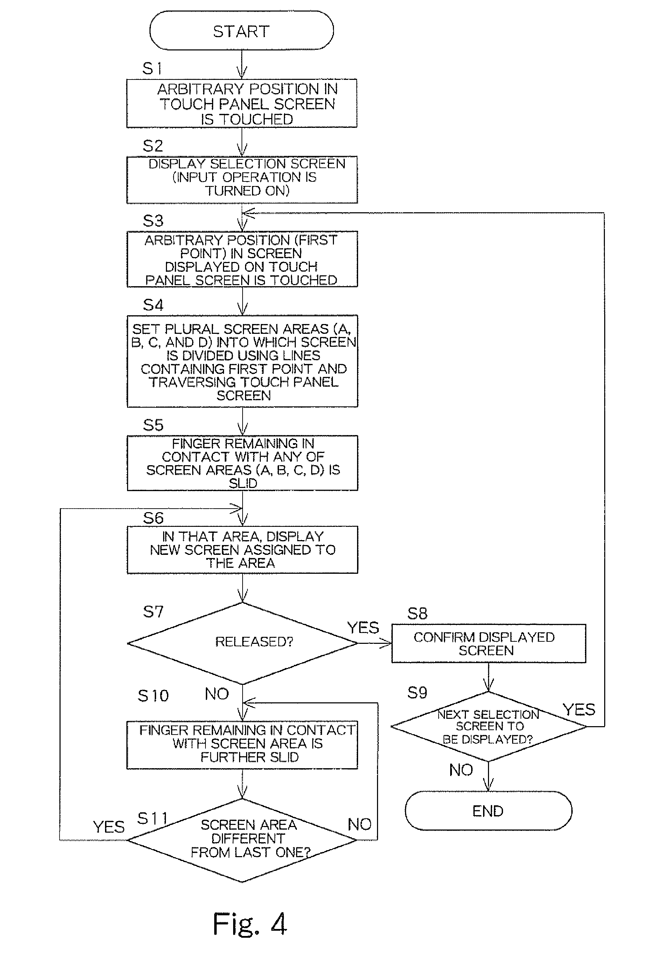

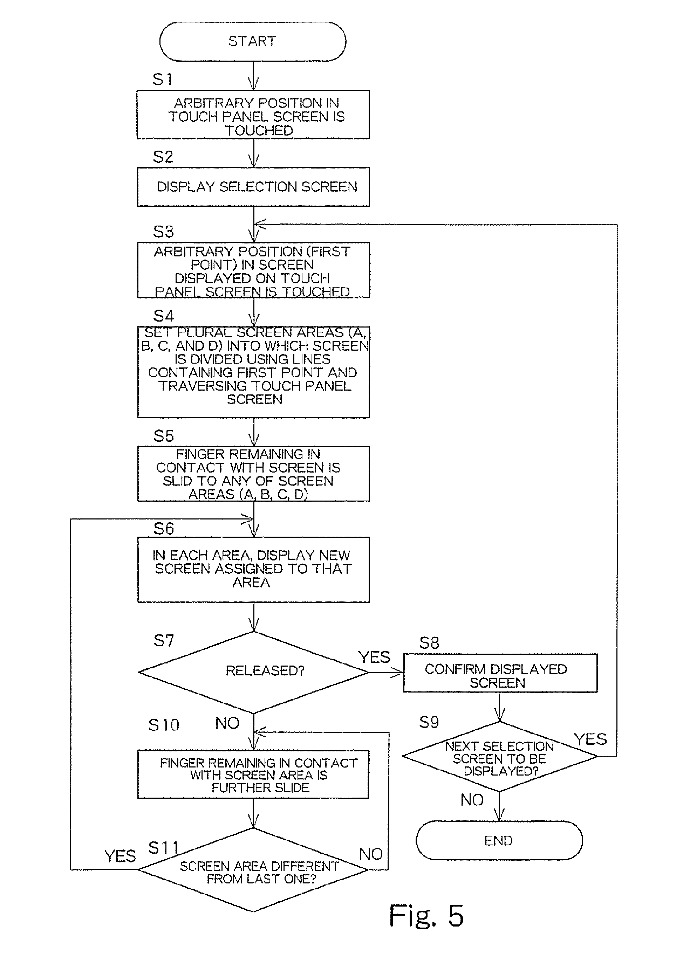

Fig. 4 shows the basic flow of the driving method according to the present invention. Fig. 5 shows the basic flow of the input method according to the present invention. The flow in Fig. 4 relates to a driving process executed in response to an input as viewed from the touch panel. The flow in Fig. 5 relates to input operations as viewed from by the user. The flow in Fig. 5 is substantially similar to that in Fig. 4. Accordingly, the description below will be given with reference to the flow chart in Fig. 4. Reference numerals S1 to S11 show steps in the flowchart.

As shown in Fig. 4, with the touch panel powered on, the user touches an arbitrary position in the touch panel screen 1 (S1). The touch panel then displays a selection screen (S2). Specifically, touching the arbitrary position on the touch panel screen 1 allows the touch panel to recognize that the input operation has been turned on to display the selection screen. Consequently, the present invention eliminates the switches used in the conventional touch panels and enables initial operations to be performed by touching the screen.

As shown in Fig. 2(a), the user touches the first point 4, the arbitrary position on the screen displayed on the touch panel (S3). The intersecting point 3 moves to the first point 4. New oblique lines L1 and L2 are then set which pass through the first point 4 and which are substantially parallel to the two oblique lines L01 and L02. Four areas A, B, C, and D are newly set into which the screen is divided using the two oblique lines L1 and L2 (S4). As shown in Fig. 2(a), in the present embodiment, the touch panel screen displays a menu display 11 showing the user the process operations assigned to the areas A, B, C, and D and their directions. The form of the menu display 11 is not limited to this display method. For example, the menu display 11 may be laid outside the operation screen of the touch panel screen 1.

The four areas A, B, C, and D are located above and below the first point 4, touched by the user, and to the right and left of the first point 4. This means that the user may move their finger or the like having initially touched the screen, upward, downward, rightward, or leftward, that is, in the sensitively easily understandable direction. Consequently, this input method is very easy and is very unlikely to cause erroneous operations. Further, as shown in Fig. 1(c), if the lines traversing the touch panel screen are a line extending through the touch panel screen in the vertical direction and a line extending through the touch panel screen in the horizontal direction, the user may recognize the obliquely upper right, obliquely lower right, obliquely upper left, and obliquely lower left of the touched first point 4.

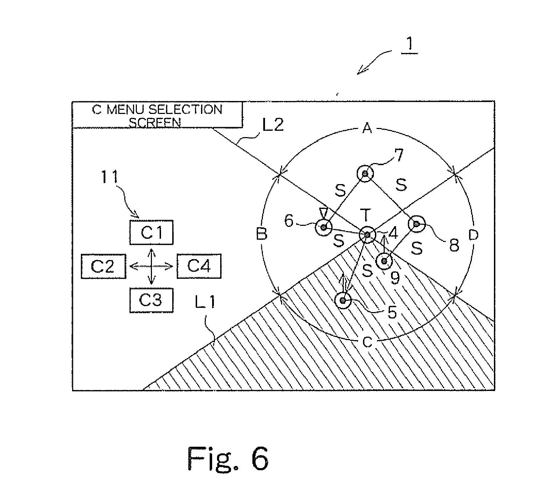

Fig. 6 shows a method for selecting a menu screen in an embodiment of the driving method and input method according to the present invention. First, description will be given of the case where the user touches the first point 4 and then selects the menu in the shaded area C, shown in Fig. 6. The user slides (S) their finger or the like downward in Fig. 6 from the first point 4, where the user first touched the screen, while keeping their finger or the like in contact with the screen (S5). Moving the finger or the like into the area C switches the screen to the C menu selection screen assigned to the area C. In other words, a new screen assigned to that area is displayed in the area (S6) . The user then releases (R) their finger or the like at the second point 5 (S7). The release (R) confirms the displayed screen (S8) . Accordingly, if the user continues the hold (H) or slide (S) without executing the release (R), the screen is not confirmed. For example, the user may hold (H) their finger or the like at a second point 6 belonging to the area B in Fig. 6, confirm the displayed screen, then slide (S) their finger or the like to a third point 7 belonging to the area A, confirm a screen (A) displayed during the slide (S), then slide (S) their finger or the like to a fourth point 8 belonging to the area D, confirm a screen (D) displayed during the slide (S), further slide (S) their finger or the like to a fifth point 9 belonging to the area C, confirm a screen (C) displayed during the slide (C), and then release (R) their finger or the like. In this case, the screen (C) is confirmed. When the user thus slides their finger or the like while keeping in touch with the screen area without executing the release (R) (S10), the touch panel determines whether or not the screen area touched (T) via the slide (S) is the same as the last screen area (S11). If the touched screen area is the same as the last one, the touch panel waits for the next touch (T). If the touched screen area is different from the last one, the touch panel returns to S6 to display a new screen. These operations are repeated until the final selection screen (S9).

That is, the user can browse through the appropriate menu selection screens via the points 6, 7, and 8 belonging to the respective areas before the release (R) . After simply moving through the screens via the slide (S), the user can select a new desired menu screen. This technique enables all the menus to be easily viewed without referencing the menu display 11. Whenever a selection menu is to be viewed, the conventional driving method and input method requires the appropriate button to be pressed to return to the original selection screen before newly pressing a selection button. However, the driving method and input method according to the present invention enables the menus to be viewed by a single operation, the slide (S).

### (Embodiment of the Driving Method and Input Method)

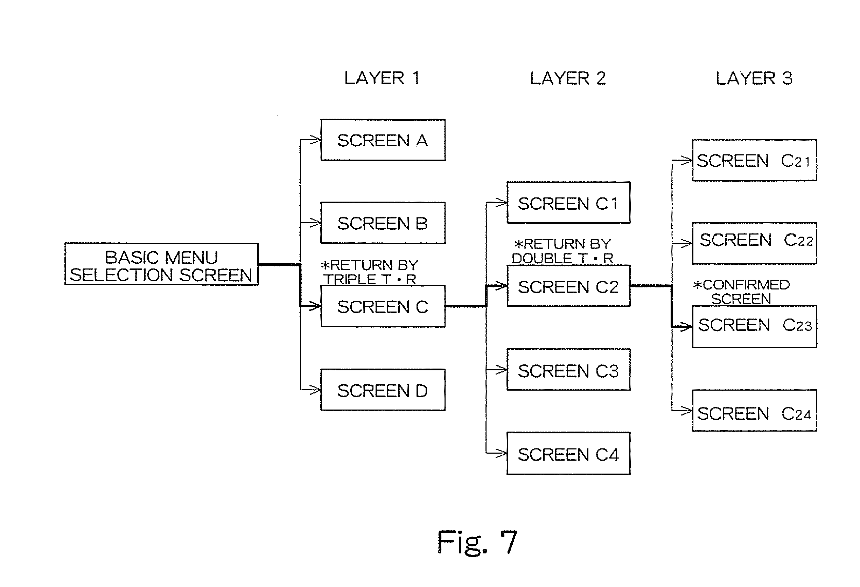

Description will be given of double touch + release (DT 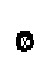 R) and double touch + hold (DT 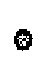 H) as an embodiment of the driving method and input method according to the present invention. Fig. 7 shows a hierarchical structure illustrating these functions. It is assumed that the current screen is a selection menu in a layer (3) which is displayed via a screen (C2) selected in a higher layer (2). The user selects a screen (C23) from screens (C21), (C22), (C23), and (C24). Here, the release would confirm the screen (C23). However, the user notices that they has mistakenly selected the screen (C23) and execute the double touch + release (DT 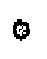 R) at an arbitrary position on the screen (C23). This operation causes a return to the screen (C2), selected in the preceding layer (2). The screen (C2) is thus confirmed. Using triple touch instead of the double touch causes a return to a screen (C) selected in a layer (1) preceding the layer (2). The screen (C) is thus confirmed. That is, the touch panel counts the number of double touch + release operations to determine that the screen moves back through an appropriate number of layers that is equal to the count. Alternatively, each click + release operation may cause a return to the screen in the preceding layer.

Now, double touch + hold (DT 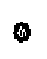 H) will be described. During the second touch (T), holding (H) the user's finger or the like without releasing (R) it causes a return to the screen (C2) in the preceding layer, which is not confirmed. Consequently, in the screen (C2), another selection menu, that is, the screens (C1), (C3), and (C4), can be viewed via the slide (S) . Thus, a return to a specific screen can be easily achieved via the basic operation patterns.

### (Another Embodiment of the Driving Method and Input Method)

The above operation patterns are basically composed of the four patterns, the touch (T), hold (H), slide (S), and release (R). Accordingly, these operation patterns performed with the user's finger or the like can be orally input. For example, while staying in contact with the touch panel screen 1 (T), the user can use a voice command such as "up", "down", "right", or "left" to select a screen instead of performing the slide (S).

## Claims

1. A driving method for a touch panel, the method comprising, when an arbitrary position on a screen displayed on a touch panel is touched, setting a plurality of screen areas into which the screen is divided using lines which contain the position and which traverse the touch panel screen, and when an arbitrary position belonging to one of the screen areas is touched, performing a process operation assigned to the screen area.

2. The driving method for a touch panel according to claim 1, wherein the screen of the touch panel is displayed by touching an arbitrary position in the screen frame of the activated touch panel.

3. The driving method for a touch panel according to claim 1 or 2, wherein the lines traversing the touch screen are oblique lines crossing each other on the touch panel screen.

4. The driving method for a touch panel according to any of claims 1 to 3, wherein the lines traversing the touch screen are a line extending through the touch panel screen in a vertical direction and a line extending through the touch panel screen in a horizontal direction.

5. The driving method for a touch panel according to any of claims 1 to 4, wherein each of the process operations assigned to the divided plurality of screen areas is confirmed by releasing the touched position.

6. The driving method for a touch panel according to any of claims 1 to 5, wherein sliding the touched position while staying in contact with the touched position allows corresponding ones of the process operations assigned to the divided plurality of screen areas to be performed in the same manner as when different positions are consecutively touched.

7. The driving method for a touch panel according to any of claims 1 to 6, wherein holding the touched position allows a corresponding one of the process operations assigned to the divided plurality of screen areas to be performed in the same manner as when the position is continuously touched.

8. The driving method for a touch panel according to any Of claims 1 to 7, further comprising switching the confirmed display of the screen to a target screen when an arbitrary position on the screen displayed on the touch panel is touched and then within a given time, the same position is touched a number of times that is equal to a number of layers present between the displayed screen and the target screen.

9. The driving method for a touch panel according to any Of claims 1 to 8, wherein the process operations assigned to the divided plurality of screen areas are displaying of menu selection screens.

10. An input method for a touch panel, the method comprising, when an arbitrary position on a screen displayed on a touch panel is touched and an arbitrary position is then touched which belongs to one of a plurality of screen areas into which the screen is divided using lines which contain the position and which traverse the touch panel screen, displaying a new screen assigned to the screen area.

11. The input method for a touch panel according to claim 10, wherein the screen of the touch panel is displayed by touching an arbitrary position in the screen frame of the activated touch panel.

12. The input method for a touch panel according to claim 10 or 11, wherein the display of the new screen is confirmed by releasing the touched position,

13. The input method for a touch panel according to any of claims 10 to 12 , wherein the confirmed display of the screen is switched to a target screen by touching an arbitrary position on the screen displayed on the touch panel and then, within a given time, touching the same position a number of times that is equal to a number of layers present between the displayed screen and the target screen.
